Europäisches Patentamt

European Patent Office

Office européen des brevets

(11) Veröffentlichungsnummer: **0 231 455 B1**

(19)

(12) **EUROPÄISCHE PATENTSCHRIFT**

(45) Veröffentlichungstag der Patentschrift: **13.05.92**

(21) Anmeldenummer: **86116102.4**

(22) Anmeldetag: **20.11.86**

(51) Int. Cl.⁵: **G02C 13/00**

(54) **Reinigungsbehälter für Brillen.**

(30) Priorität: **23.01.86 DE 8601566 U**

(43) Veröffentlichungstag der Anmeldung:
**12.08.87 Patentblatt 87/33**

(45) Bekanntmachung des Hinweises auf die
Patenterteilung:
**13.05.92 Patentblatt 92/20**

(84) Benannte Vertragsstaaten:
**AT BE ES FR GB IT NL SE**

(56) Entgegenhaltungen:
**DE-U- 8 601 566**
**GB-A- 2 042 208**
**US-A- 4 196 487**

(73) Patentinhaber: **Freise, Siegfried**
**Wilhelm von Miller-Weg 8**
**W-8100 Garmisch-Partenkirchen(DE)**

(72) Erfinder: **Freise, Siegfried**
**Wilhelm von Miller-Weg 8**
**W-8100 Garmisch-Partenkirchen(DE)**

(74) Vertreter: **Huss, Carl-Hans, Dipl.-Ing.**
**Patentanwalt Griesstrasse 3 a Postfach 14 54**
**W-8100 Garmisch-Partenkirchen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.08/2.19/2.0)

**Beschreibung**

Die Sehleistung von Brillenträgern kann durch Verschmutzung der Brillengläser stark beeinträchtigt werden, die auf die verschiedenste Weise, z.B. durch falsches Ablegen der Brille, Anfassen der Gläser, durch Schmutzpartikel in der Luft usw. eintreten kann. Das übliche Reinigen der Gläser durch Wischen mit einem Tuch führt, insbesondere bei einer fettig schmierigen Verschmutzung, häufig nicht zum Erfolg. Sehr empfindlich sind in dieser Beziehung Kunststoffgläser und/oder entspiegelte Gläser.

Hier schafft die Erfindung Abhilfe, die sich auf einen Behälter für die Reinigung von Brillen richtet, in dem eine Brille der Einwirkung einer schmutzlösenden Reinigungsflüssigkeit, gegebenenfalls auch längere Zeit, ausgesetzt werden kann. Bekannte Reinigungsbehälter, z.B. nach der DE-AS 30 02 717, sind kompliziert im Aufbau, teuer und störanfällig und damit für den privaten Gebrauch ungeeignet. Außerdem kann in ihnen die häufig sehr teure und empfindliche Brille, d.h. sowohl die Gläser als auch das Gestell, beschädigt werden. Demgegenüber ist der Reinigungsbehälter nach der Erfindung sehr einfach und einfach herstellbar, und die Brille kann in ihm während des Reinigungsprozesses, auch wenn man ihn schüttelt, nicht beschädigt werden. Dies trifft auch auf den Reinigungsbehälter für Brillen nach der US-A-4 196 487 zu, für dessen Benutzung das Schütteln des Behälters mit der in ihm befindlichen Brille und Reinigungsflüssigkeit ausdrücklich vorgeschrieben ist, wobei die im Behälter nicht fixierte Brille beschädigt werden kann.

Der Reinigungsbehälter gemäß der Erfindung ist wie im Anspruch 1 definiert.

Die Erfindung ist an einigen, keinen Anspruch auf Vollständigkeit erhebenden Beispielen in den Zeichnungen veranschaulicht und anhand dieser nachfolgend beschrieben. Es stellen dar:

| | |
|---|---|
| Fig. 1 | einen Vertikalschnitt durch einen Reinigungsbehälter nach der Erfindung in gering verkleinertem Maßstab; |
| Fig. 2 | eine abgewandelte Ausführungsform eines Reinigungsbehälters im Vertikalschnitt; |
| Fig. 3 | einen Horizontalschnitt durch den Gegenstand der Fig. 2, geschnitten längs der Linie III-III in Fig. 2; |
| Fig. 4 und 5 | weitere mögliche Horizontalschnitte eines erfindungsgemäßen Reinigungsbehälters; |
| Fig. 6 und 7 | weiter abgewandelte Ausführungsformen im Vertikalschnitt bzw. -Teilschnitt. |

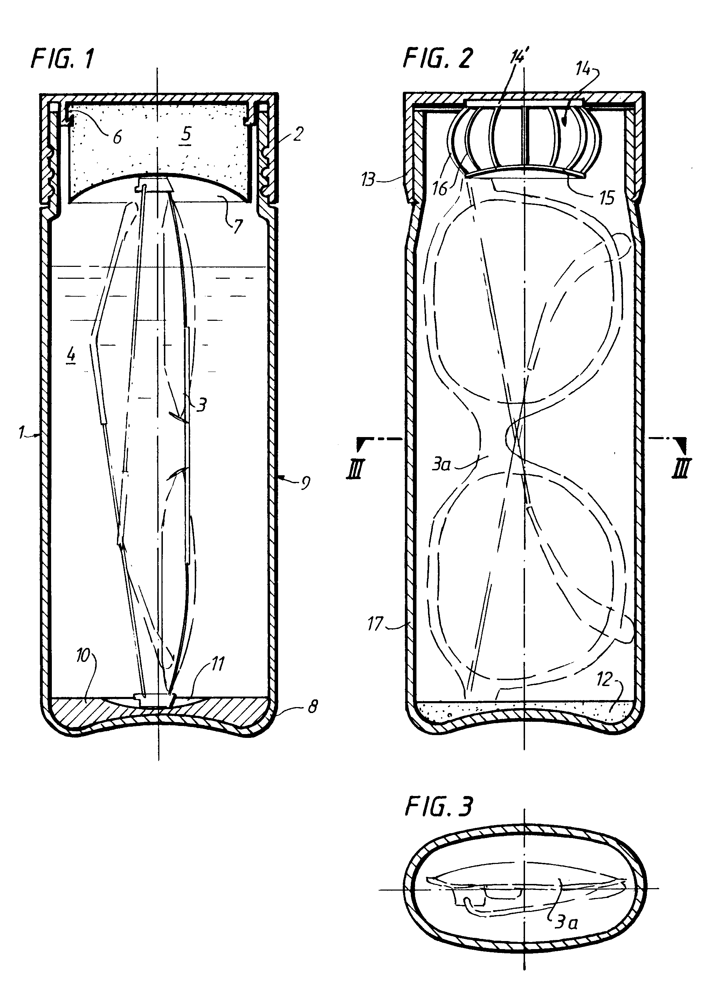

In Fig. 1 ist allgemein mit 1 ein Reinigungsbehälter bezeichnet, der durch einen einen Bestandteil desselben bildenden Schraubverschlußdeckel 2 dicht verschließbar ist und im geschlossenen Zustand die zu reinigende Brille 3 und eine Reinigungsflüssigkeit 4 aufnimmt. Der Behälter 1 kann aus einem geeigneten Kunststoff im Blas- und/oder Spritz- und/oder Ziehverfahren hergestellt sein.

In den Deckel 2 ist ein Halteorgan 5 eingesetzt, das bei dem in Fig. 1 dargestellten Beispiel durch die Hinterschneidung eines einen integralen Bestandteil des Deckels 2 bildenden Ringsteges 6 gehalten wird und aus einem Schaumstoffzylinder besteht. Die der Brille zugewandte Stirnfläche 7 des Halteorgans 5 ist mit einer Vertiefung versehen und ist hierzu konkav kalottenförmig ausgebildet, um die Brille 3 im Behälter besser in Achsrichtung zu halten und sie beim Zuschrauben des Deckels nicht seitlich wegzudrücken. Zu dem gleichen Zweck ist in den Boden 8 des Gefäßes 9 ein Einsatz 10 eingeklemmt, dessen der Brille zugewandte Stirnfläche eine kalottenförmige Vertiefung aufweist. Zwischen dem Halteorgan 5 und dem Halteorgan 10 wird die zu reinigende Brille 3 schonend eingeklemmt, damit sie während des Reinigungsvorganges ihre dargestellte Lage beibehält und ihre empfindlichen Gläser die Wände des Reinigungsgefäßes 9 nicht berühren.

Bei dem Ausführungsbeispiel nach Fig. 2 wurde das, eine kalottenförmige Vertiefung 11 aufweisende besondere Halteorgan 10 durch eine einfache glatte Scheibe 12 aus Schaumstoff ersetzt, während das obere, im Deckel 13 eingesetzte Halteorgan als korbartiger Niederhalter 14 ausgebildet ist, der aus einer in den Deckel eingesetzten, z.B. eingeklebten Grundplatte 14', einer konkav gekrümmten Halteplatte 15 und Stegen 16 besteht.

Der Querschnitt der erfindungsgemäßen Reinigungsbehälter kann kreisrund sein oder eine vom Kreisring abweichende Form haben. Gemäß der Fig. 3 ist der Querschnitt des Gefässes 17 oval und berücksichtigt damit, daß eine senkrecht eingesteckte Brille 3a meist zwischen Nasensteg und Unterkante der Brillenfassung eine größere Abmessung als quer dazu hat. In einem solchen Fall kann natürlich der Deckel 2 oder 13 nur eine Steck- oder Klemmkappe sein. Die ovale Querschnittsform erlaubt es, bei gleicher Reinigungswirkung weniger Reinigungsflüssigkeit zu verwenden, und außerdem ist ein derartiger Behälter leichter als ein kreisrunder z.B. in einer Tasche oder liegend in einer Schublade unterzubringen. Dagegen hat die kreisrunde Querschnittsgestaltung den Vorteil, die Gefahr, daß die empfindlichen, beispielsweise aus Kunststoff bestehenden und/oder entspiegelten Brillengläser beim Einstecken oder Herausholen aus dem Gefäß an der Wand schaben, auszuschalten.

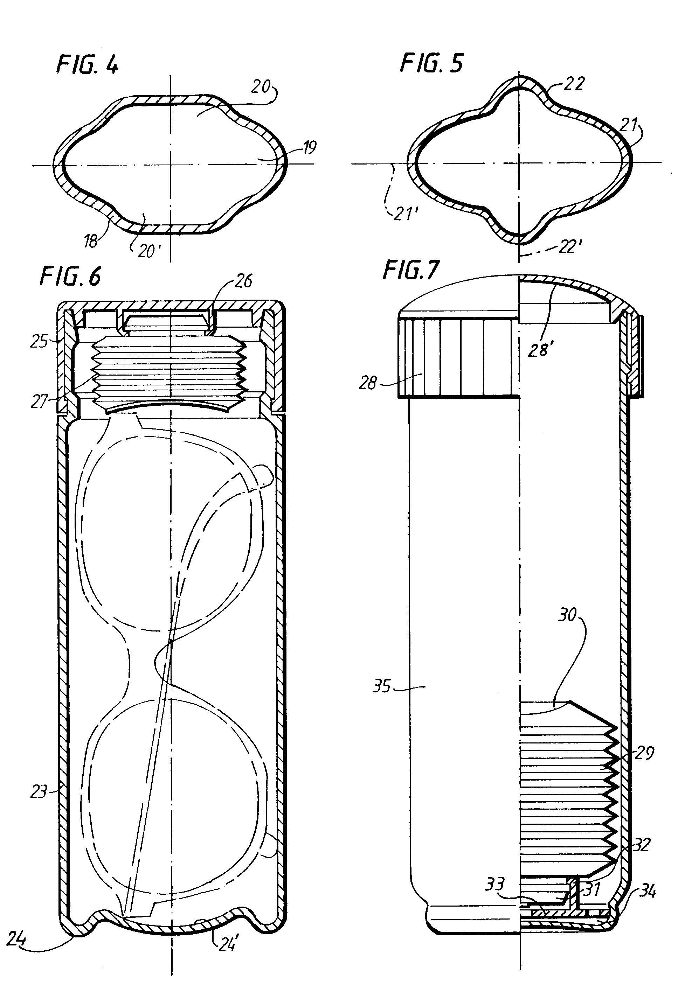

Aus der ovalen Querschnittsgestaltung nach Fig. 3 wurde die nach Fig. 4 entwickelt, bei der der Mantel 18 des Gefässes 19 eine sich über die gesamte oder fast die gesamte Höhe erstreckende Tasche 20 oder zwei Taschen 20, 20' aufweist, die eine eingesteckte Brille zusätzlich gegen seitliches Kippen halten.

Die Querschnittsgestaltung nach Fig. 5 ist aus zwei im rechten Winkel zueinander liegenden verschieden großen Ovalen oder Ellipsen 21 und 22 zusammengesetzt, so daß in das große Oval 21 mit der Achse 21' eine größere Brille, z.B. Erwachsenen- oder Sonnenbrille oder quer dazu in das kleinere Oval 22 mit der Achse 22' eine kleinere Brille, z.B. Halbbrille oder Kinderbrille, eingesteckt werden kann.

Bei der Ausführungsform nach Fig. 6 besteht das untere Halteorgan aus einer bei der Herstellung des Gefässes 23, beispielsweise durch Blasen oder Tiefziehen in den Boden 24 eingeformten Kalotte 24', d.h. das untere Halteorgan in Form einer konkaven Kalotte ist ein integraler Bestandteil des Bodens 24 des Gefässes 23. Das obere Halteorgan ist ein in einen, einen integralen Bestandteil des Deckels 25 bildenden Kreisringsteg 26 mit Hinterschneidung eingesprengter Faltenbalg 27, der in relativ weiten Grenzen eine Anpassung an verschiedene Brillengrössen gestattet.

Umgekehrt besitzt der Reinigungsbehälter nach Fig. 7 kein oberes Halteorgan, sondern dafür als Deckel eine entsprechend gewölbte Verschlußkappe 28, deren Innenfläche als konkav kalottenförmiges Halteorgan 28' wirkt, sowie ein bodenseitig befestigtes Halteorgan, hier in Form eines Faltenbalgs 29 mit innerer Wölbung 30, dessen Befestigungsstutzen 31 in den Ringsteg 32 einer Scheibe 33 eingesprengt ist, die in eine ringförmige Sicke 34 des Bodens des Gefässes 35 eingedrückt ist.

Die vorstehend erläuterten Ausführungsformen können nur Beispielsfunktion haben. Es versteht sich insbesondere, daß die Elemente größtenteils austauschbar sind. So können z.B. im Deckel und Boden gleiche oder gleichartige Halteorgane vorhanden sein oder die mit Bezug auf einen bestimmten Behälter erwähnten Halteorgane auch in Behältern anderer Gestaltung angeordnet sein.

Für den Gebrauch kann es genügen, die Brille in den mit einer Reinigungsflüssigkeit gefüllten Behälter einzustecken und in diesem eine Zeitlang zu belassen, wenn dabei beide Gläser in die Flüssigkeit eintauchen. Ist das nicht der Fall, kann der Behälter nach einer gewissen Zeit auf den Deckel gestellt werden, so daß beide Brillengläser nacheinander der Reinigungswirkung der Flüssigkeit ausgesetzt sind, oder man kann die Reinigung durch Schütteln oder Schwenken des Behälters beschleunigen.

**Patentansprüche**

1. Reinigungsbehälter (1) für Brillen (3) mit einem eine Reinigungsflüssigkeit (4) und die zu reinigende Brille (3) der Länge nach aufnehmenden Reinigungsgefäß (9,17,23,35) und einem Deckel (2,13,25,28), dadurch **gekennzeichnet,** daß an der Innenseite des Gefäßbodens (8,24) und des Deckels (2,13,25,28) je ein mit dem Boden und/oder dem Deckel verbundenes oder einen integralen Bestandteil derselben bildendes Halteorgan vorgesehen ist, wobei zur Anpassung an unterschiedliche Brillenlängen mindestens eines (5,12,14,27,29) der Halteorgane elastisch federnd ausgebildet ist und mindestens eines (5,10,14,24,27,28) der Halteorgane eine Vertiefung in der der Brille zugewandten Stirnfläche aufweist.

2. Reinigungsbehälter nach dem Anspruch 1, dadurch **gekennzeichnet,** daß das elastisch federnd ausgebildete Halteorgan ein Schaumstoffzylinder (5,17) oder korbartiger Niederhalter (14) oder Faltenbalg (27,29) ist.

3. Reinigungsbehälter nach dem Anspruch 1, dadurch **gekennzeichnet,** daß die Vertiefung in der der Brille zugewandten Stirnfläche eines Halteorgans konkav kalottenförmig (7,11,15,24',28') ausgebildet ist.

4. Reinigungsbehälter nach dem Anspruch 3, dadurch **gekennzeichnet,** daß die konkav-kalottenförmige Ausbildung durch die Formgebung des Deckels (28) oder Bodens (24) selber geschaffen ist.

5. Reinigungsbehälter nach den Ansprüchen 1 bis 4, **gekennzeichnet** durch einen runden oder ovalen Querschnitt.

6. Reinigungsbehälter nach dem Anspruch 5, dadurch **gekennzeichnet,** daß der Querschnitt aus zwei rechtwinklig zueinander liegenden Ovalen (21 und 22) mit unterschiedlich langen Achsen (21',22') zusammengesetzt ist.

7. Reinigungsbehälter nach dem Anspruch 5, dadurch **gekennzeichnet,** daß der Querschnitt des Behälters parallel zur großen Achse auf einer oder beiden Seiten eine auf eine Brille abgestimmte Tasche (20,20') aufweist.

**Claims**

1. Cleaning container (1) for spectacles (3) with a cleaning vessel (9, 17, 23, 35) containing a cleaning fluid (4) and, longitudinally, the spectacles (3) to be cleaned, and with a cover (2, 13, 25, 28), characterised in that there are provided respectively on the inner side of the base (8, 24) of the vessel and of the cover (2, 13, 25, 28) a retaining means connected respectively to the base and/or to the cover, or forming an integral part thereof, at least one of the retaining means (5, 12, 14, 27, 29) being elastically resilient in design in order to adapt to different spectacle lengths, and at least one of the retaining means (5, 10, 14, 24, 27, 28) having a cavity in the end surface facing the spectacles.

2. Cleaning container according to Claim 1, characterised in that the elastically resiliently-designed retaining means is a foam material cylinder (5, 17), or a basketlike holding-down means (14) or a concertina bellows (27, 29).

3. Cleaning container according to Claim 1, characterised in that the cavity in the end surface of the retaining means facing the spectacles has a concave dome shape (7, 11, 14, 24', 28').

4. Cleaning container according to Claim 3, characterised in that the concave dome shape is provided by the shaping of the cover (28) or of the base (24) itself.

5. Cleaning container according to Claims 1 to 4, characterised by a round or oval cross-section.

6. Cleaning container according to Claim 5, characterised in that the cross-section is made up of two ovals (21 and 22) lying at right angles to one another, with axes (21', 22') of different lengths.

7. Cleaning container according to Claim 5, characterised in that the cross-section of the container, parallel to the large axis, has on one or both sides a pocket (20, 20') adapted to receive a pair of spectacles.

**Revendications**

1. Récipient de nettoyage (1) pour lunettes (3) comportant une cuve de nettoyage (9, 17, 23, 35) contenant un liquide de nettoyage (4) et contenant dans le sens de la longueur les lunettes (3) à nettoyer, ainsi qu'un couvercle (2, 13, 25, 28), caractérisé en ce que sur la face intérieure du fond de cuve (8, 24) et du couvercle (2, 13, 25, 28) est prévu selon le cas un organe de retenue assemblé au fond et/ou au couvercle ou formant partie intégrante de ceux-ci, l'un au moins (5, 12, 14, 27, 29) des organes de retenue étant conçu de manière à former un ressort élastique et l'un au moins (5, 10, 14, 24, 27, 28) des organes de retenue présentant une partie en creux dans la face frontale tournée vers les lunettes, pour l'adaptation à des longueurs de lunettes différentes.

2. Récipient de nettoyage selon la revendication 1, caractérisé en ce que l'organe de retenue, conçu de manière à former un ressort élastique, est un cylindre en mousse (5, 17) ou un organe presseur (14) en forme de corbeille ou un soufflet (27, 29).

3. Récipient de nettoyage selon la revendication 1, caractérisé en ce que la partie en creux pratiquée dans la face frontale tournée vers les lunettes de l'organe de retenue est en forme de calotte concave (7, 11, 15, 24', 28').

4. Récipient de nettoyage selon la revendication 3, caractérisé en ce que la configuration en calotte concave est réalisée elle-même par la forme donnée au couvercle (28) ou au fond (24).

5. Récipient de nettoyage selon les revendications 1 à 4, caractérisé en ce qu'il présente une section transversale ronde ou ovale.

6. Récipient de nettoyage selon la revendication 5, caractérisé en ce que sa section transversale est constituée de deux ovales (21 et 22) placés à angle droit l'un par rapport à l'autre avec des axes (21', 22') de longueur différente.

7. Récipient de nettoyage selon la revendication 5, caractérisé en ce que sa section transversale présente, parallèlement au grand axe, sur un ou les deux côtés, une poche (20, 20') adaptée à une paire de lunettes.

*FIG. 1*

*FIG. 2*

*FIG. 3*

FIG. 4

FIG. 5

FIG. 6

FIG. 7